# EUROPEAN PATENT SPECIFICATION

(11) **EP 4 134 844 B1**
(45) Date of publication and mention of the grant of the patent: **04.12.2024**
(21) Application number: 21783804.4
(22) Date of filing: 25.03.2021
(51) Int. Cl.: G06F 21/10, G06F 21/12

(54) **INFORMATION PROCESSING METHOD, PROGRAM AND INFORMATION PROCESSING DEVICE**
INFORMATIONSVERARBEITUNGSVERFAHREN, PROGRAMM UND INFORMATIONSVERARBEITUNGSVORRICHTUNG
PROCÉDÉ DE TRAITEMENT D'INFORMATIONS, PROGRAMME ET DISPOSITIF DE TRAITEMENT D'INFORMATIONS

(30) Priority: 08.04.2020 JP 2020069488
(43) Date of publication of application: 15.02.2023
(73) Proprietor: Sony Group Corporation, Tokyo 108-0075 (JP)
(72) Inventor: HIRATSUKA, Yosuke, Tokyo 108-0075 (JP)
(74) Representative: D Young & Co LLP
(86) International application number: PCT/JP2021/012469
(87) International publication number: WO 2021/205889

(56) References cited:
- CN-A- 106 971 097
- JP-A- 2014 035 643
- JP-A- 2015 219 911
- JP-A- 2019 202 865
- US-A1- 2017 011 224

## Description

### TECHNICAL FIELD

The present technology relates to an information processing method, a program, an information processing apparatus, and a data structure. More particularly, the present technology relates to an information processing method, a program, an information processing apparatus, and a data structure that enable use of a time-limited maintenance license on an information processing apparatus used offline.

### BACKGROUND ART

Conventionally, a technology for preventing unauthorized use of an upgraded application program (hereinafter referred to as an APP) has been developed (e.g., refer to Patent Document 1).

Furthermore, in recent years, software update package (SUP) services have become widespread that enable upgrade of an APP during a valid period of a maintenance license by entering a maintenance contract. For example, a user can freely upgrade an owned APP during the valid period of the maintenance license by purchasing a time-limited maintenance license.

### CITATION LIST

### PATENT DOCUMENT

Patent Document 1: Japanese Patent Application Laid-Open No. 2001-175468
Prior art includes US2017/011224 A1.

### SUMMARY OF THE INVENTION

### PROBLEMS TO BE SOLVED BY THE INVENTION

Incidentally, the validity of a maintenance license is normally determined by a server that provides a new version of an APP. For example, in a case where the server confirms the validity and a valid period of a maintenance license held by a user and determines that the maintenance license is valid, a new version of the APP is made available.

However, in this case, for security reasons or the like, a time-limited maintenance license cannot be used on an information processing apparatus such as a personal computer (PC) that is used offline and does not directly communicate with the server.

The present technology has been developed in view of such a situation, and enables use of a time-limited maintenance license in an information processing apparatus used offline.

### SOLUTIONS TO PROBLEMS

An information processing method according to a first aspect of the present technology is provided in claim 1.

A program according to the first aspect of the present technology executes processing and is provided in claim 13.

An information processing apparatus according to the first aspect of the present technology is provided in claim 15.

### BRIEF DESCRIPTION OF DRAWINGS

Fig. 1 is a block diagram illustrating an embodiment of an information processing system to which the present technology is applied.
Fig. 2 is a block diagram illustrating a configuration example of a computer.
Fig. 3 is a block diagram illustrating a configuration example of functions of a server.
Fig. 4 is a block diagram illustrating a configuration example of functions of an information processing apparatus.
Fig. 5 is a diagram illustrating a format example of an installation key.
Fig. 6 is a flowchart for describing maintenance license issuance processing.
Fig. 7 is a flowchart for describing the maintenance license application processing.
Fig. 8 is a flowchart for describing APP activation processing.
Fig. 9 is a diagram for describing an operation example of a maintenance license.
Fig. 10 is a diagram for describing the operation example of the maintenance license.
Fig. 11 is a diagram illustrating an example of a confirmation screen for the maintenance license.

### MODE FOR CARRYING OUT THE INVENTION

Hereinafter, modes for implementing the present technology will be described. Description will be given in the following order.
1. Embodiment
2. Variations
3. Others

### <<1. Embodiment>>

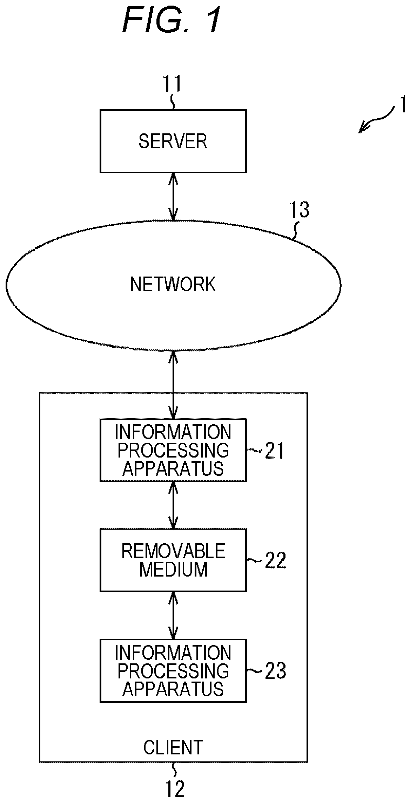

An embodiment of the present technology will be described with reference to Figs. 1 to 9.

### <Configuration Example of Information Processing System 1>

Fig. 1 illustrates a configuration example of an information processing system 1 to which the present technology is applied.

The information processing system 1 includes a server 11, a client 12, and a network 13. The client 12 includes an information processing apparatus 21, a removable medium 22, and an information processing apparatus 23.

The server 11 and the information processing apparatus 21 are connected via the network 13 and communicate with each other.

The server 11 provides and manages an APP used on the information processing apparatus 23 and a time-limited maintenance license of the APP.

Here, the time-limited maintenance license is a license that enables upgrade of the functions of the covered APP during a contracted valid period. For example, a user can upgrade the functions of the covered APP until the end of the valid period by purchasing a time-limited maintenance license.

Note that functions subject to the maintenance license may be all functions of the APP, or may be some of the functions of the APP. In the former case, the maintenance license can also be regarded as a maintenance license for the entire APP. Furthermore, the type of functions subject to the maintenance license is not particularly limited, and the functions may be functions provided for a fee or functions provided for free.

The information processing apparatus 21 exchanges various data with the server 11 by communicating with the server 11 via the network 13. For example, the information processing apparatus 21 receives an APP used on the information processing apparatus 23 and maintenance license data regarding a maintenance license for the APP from the server 11. Furthermore, the information processing apparatus 21 transmits various data such as data regarding the information processing apparatus 23 to the server 11 as necessary.

Note that the information processing apparatus 21 is not particularly limited as long as it is an apparatus capable of communicating with the server 11 via the network 13. For example, the information processing apparatus 21 is configured as a PC.

The removable medium 22 includes elements such as a magnetic disk, an optical disk, a magneto-optical disk, or semiconductor memory, and is used to exchange various data between the information processing apparatus 21 and the information processing apparatus 23.

For reasons such as security, the information processing apparatus 23 is prohibited from being connected to the network 13 or is difficult to connect to the network 13, is basically used offline, and does not directly communicate with the server 11. For example, the user can use the APP and the maintenance license on the information processing apparatus 23 by installing (storing) the APP and the maintenance license data provided from the server 11 on the information processing apparatus 23 via the removable medium 22.

Note that the information processing apparatus 23 is not particularly limited as long as it can be used offline and can install (store) and execute the APP. For example, the information processing apparatus 21 is configured as a PC.

Note that, in Fig. 1, only one client 12 is illustrated for easy understanding of the figure and the description, but a plurality of clients 12 is actually provided. Moreover, although only one server 11 is illustrated, a plurality of servers 11 may be provided. Furthermore, one client 12 may include a plurality of at least one of the information processing apparatus 21, the removable medium 22, or the information processing apparatus 23.

### <Configuration Example of Computer 101>

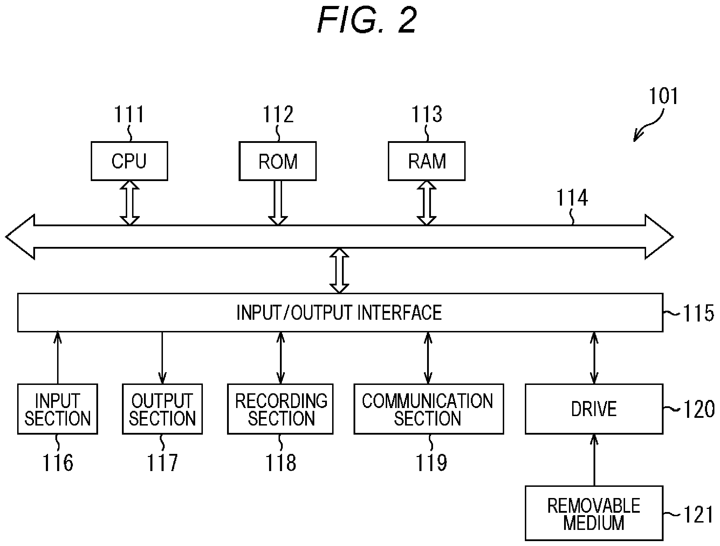

Fig. 2 is a block diagram illustrating a configuration example of a computer 101 applicable to the server 11, the information processing apparatus 21, and the information processing apparatus 23.

In the computer 101, a central processing unit (CPU) 111, read-only memory (ROM) 112, and random-access memory (RAM) 113 are connected to each other by a bus 114.

An input/output interface 115 is further connected to the bus 114. An input section 116, an output section 117, a recording section 118, a communication section 119, and a drive 120 are connected to the input/output interface 115.

The input section 116 includes elements such as an input switch, a button, a microphone, and an imaging element.

The output section 117 includes elements such as a display and a speaker.

The recording section 118 includes elements such as a hard disk and nonvolatile memory.

The communication section 119 includes elements such as a network interface.

The drive 120 drives a removable medium 121 such as a magnetic disk, an optical disk, a magneto-optical disk, or semiconductor memory. The removable medium 22 in Fig. 1 is a type of removable medium 121.

In the computer 101 configured as described above, for example, the CPU 111 loads a program such as an APP stored in the recording section 118 into the RAM 113 via the input/output interface 115 and the bus 114 and executes the program, thereby performing a series of processing.

The program executed by the computer 101 (CPU 111) can be provided by being recorded in the removable medium 121 as a package medium or the like, for example. Furthermore, the program can be provided via a wired or wireless transmission medium such as a local area network, the Internet, or digital satellite broadcasting.

In the computer 101, the program can be installed in the recording section 118 via the input/output interface 115 by attaching the removable medium 121 to the drive 120. Furthermore, the program can be received by the communication section 119 via a wired or wireless transmission medium and installed in the recording section 118. In addition, the program can be installed in the ROM 112 or the recording section 118 in advance.

Note that description of the bus 114 and the input/output interface 115 in the computer 101 will be omitted in the following. For example, in a case where the CPU 111 and the communication section 119 perform communication via the bus 114 and the input/output interface 115, description of the bus 114 and the input/output interface 115 is omitted, and the CPU 111 and the communication section 119 are simply described as performing communication.

Furthermore, an example in which the server 11, the information processing apparatus 21, and the information processing apparatus 23 are configured as the computer 101 will be described below.

Moreover, hereinafter, in order to distinguish each section of the computer 101 constituting the server 11, the information processing apparatus 21, and the information processing apparatus 23, a letter A, B, or C is added to the end of the reference sign of each section. For example, the letter A is added to the end of the CPU 111 of the computer 101 constituting the server 11 to obtain a CPU 111A. For example, the letter B is added to the end of the CPU 111 of the computer 101 constituting the information processing apparatus 21 to obtain a CPU 111B. For example, the letter C is added to the end of the CPU 111 of the computer 101 constituting the information processing apparatus 23 to obtain a CPU 111C.

### <Configuration Example of Functions of Server 11>

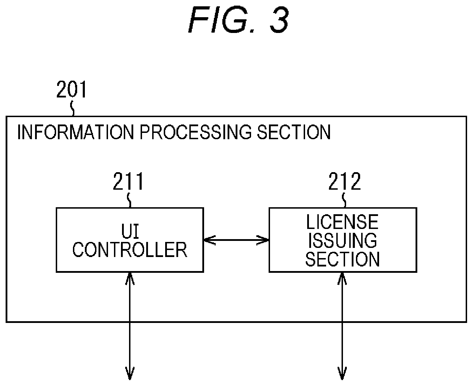

Fig. 3 illustrates an example of functions achieved by the CPU 111A of the server 11 executing a predetermined program.

The CPU 111A executes the program to achieve an information processing section 201. The information processing section 201 includes a user interface (UI) controller 211 and a license issuing section 212.

The UI controller 211 communicates with the information processing apparatus 21 via the communication section 119 and the network 13, and controls a UI of the information processing apparatus 21. For example, the UI controller 211 causes the information processing apparatus 21 to display a screen for performing a maintenance license purchase procedure, and performs processing regarding the maintenance license purchase procedure.

The license issuing section 212 performs maintenance license issuance processing in response to the maintenance license purchase procedure performed by the UI controller 211 through the information processing apparatus 21. The license issuing section 212 generates an installation key which is maintenance license data regarding an issued maintenance license. The license issuing section 212 transmits the license file including the generated installation key to the information processing apparatus 21 via the communication section 119 and the network 13.

### <Configuration Example of Functions of Information Processing Apparatus 23>

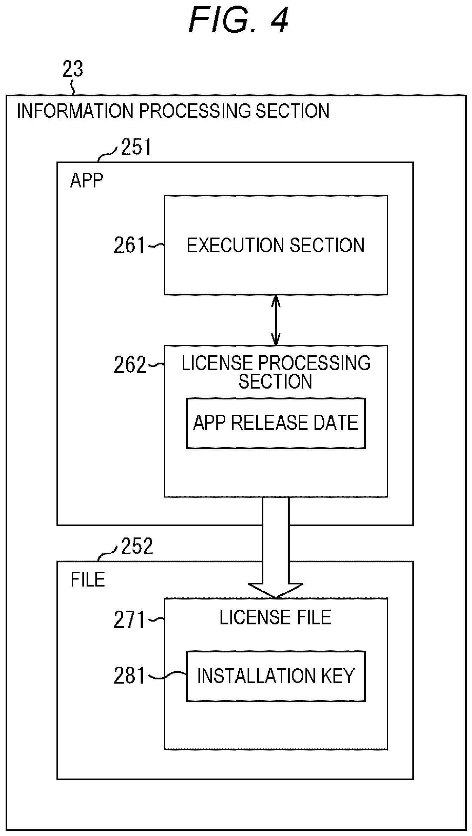

Fig. 4 illustrates a configuration example of functions achieved by the information processing apparatus 23 executing an APP 251.

The information processing apparatus 23 executes the APP 251, thereby achieving an execution section 261 and a license processing section 262.

The execution section 261 executes processing regarding each function of the APP 251. Furthermore, the execution section 261 controls the validation of functions subject to the maintenance license on the basis of a determination result of the validity of the maintenance license by the license processing section 262.

The license processing section 262 executes processing regarding a license for the APP 251. For example, the license processing section 262 performs processing to install an installation key 281 corresponding to the maintenance license for the APP 251 in the information processing apparatus 23. For example, the license processing section 262 determines the validity of the maintenance license on the basis of an APP release date stored in the APP 251 and the installation key 281, and notifies the execution section 261 of the determination result.

Note that the APP release date indicates a date on which the APP 251 was released (a date on which provision of the APP 251 was started). Note that the APP release date is set to a different date for each version of the APP 251. That is, a different APP release date for each version of the APP 251 is stored (recorded) in the binary data of the APP 251 for each version.

Furthermore, the functions subject to the maintenance license may be all functions of the APP 251, or may be some of the functions of the APP 251.

Moreover, different maintenance licenses may be used for respective functions of the APP 251. In other words, a plurality of maintenance licenses may apply to different respective functions of the APP 251.

Furthermore, for example, the installation key 281 is provided from the server 11 in a state of being included in a license file 271, and is stored in a file 252 of the recording section 118C of the information processing apparatus 23.

<Format Example of Installation Key>

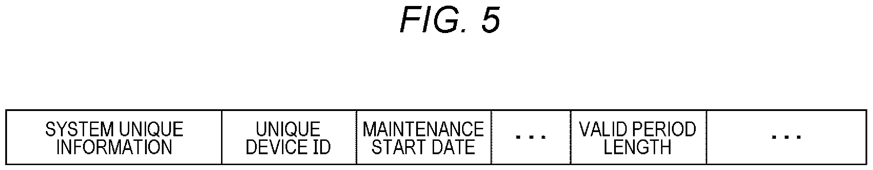

Fig. 5 illustrates a format example of the installation key 281.

The installation key 281 includes, for example, system unique information, a unique device ID, a maintenance start date, and a valid period length.

The system unique information is identification information for uniquely identifying the maintenance license corresponding to the installation key 281 in the server 11.

The unique device ID is an ID unique to the information processing apparatus 23 for which the maintenance license is used, and is identification information for uniquely identifying the information processing apparatus 23.

Note that the maintenance license and the information processing apparatus 23 using the maintenance license are associated with each other by the system unique information and the unique device ID.

A start date of the maintenance license is set as the maintenance start date.

The length of the valid period of the maintenance license is set as the valid period length. The valid period length is set in units of year (e.g., 1 year), month (e.g., 6 months), week (e.g., 10 weeks), and day

(e.g., 90 days), for example.

Note that the valid period of the maintenance license, that is, the start date of the maintenance license and the end date of the maintenance license (the expiration date of the maintenance license) are specified on the basis of the maintenance start date and the valid period length.

### <Maintenance License Issuance Processing>

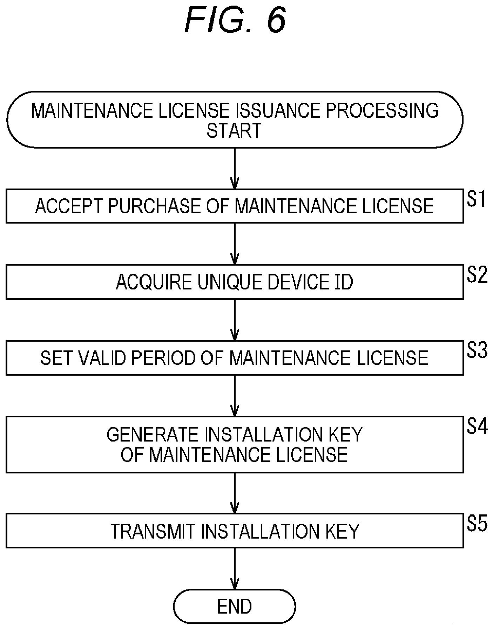

Next, maintenance license issuance processing executed by the server 11 will be described with reference to a flowchart in Fig. 6.

This processing is started, for example, when the user performs an operation for a maintenance license purchase procedure of the APP 251 using the information processing apparatus 21 and a command to start the purchase procedure is transmitted from the information processing apparatus 21 to the server 11.

In step S1, the server 11 starts the maintenance license purchase procedure. For example, the UI controller 211 controls the information processing apparatus 21 via the communication section 119A and the network 13 to display a maintenance license purchase screen in response to a command from the information processing apparatus 21.

By contrast, the user starts the maintenance license purchase procedure according to the purchase screen displayed on the information processing apparatus 21. The information processing apparatus 21 transmits data appropriately input by the user to the server 11 via the network 13.

By contrast, the UI controller 211 of the server 11 receives data input by the user via the communication section 119A, and supplies the data to the license issuing section 212 as necessary. The license issuing section 212 generates a purchase code which uniquely identifies the maintenance license purchased by the user.

In step S2, the server 11 acquires a unique device ID.

For example, the user inputs the unique device ID of the information processing apparatus 23 to the information processing apparatus 21. The information processing apparatus 21 transmits the input unique device ID to the server 11 via the network 13.

By contrast, the UI controller 211 of the server 11 receives the unique device ID via the communication section 119A, and supplies the unique device ID to the license issuing section 212.

In step S3, the server 11 sets the valid period of the maintenance license.

For example, the user inputs a maintenance start date and a valid period length of the APP 251 to the information processing apparatus 21. The information processing apparatus 21 transmits information indicating the input maintenance start date and the valid period length to the server 11 via the network 13.

By contrast, the UI controller 211 of the server 11 receives the information indicating the maintenance start date and the valid period length via the communication section 119, and supplies the information to the license issuing section 212. The license issuing section 212 sets a valid period of the maintenance license of the APP 251 in the information processing apparatus 23 on the basis of the received information.

In step S4, the license issuing section 212 generates the installation key 281 of the maintenance license. Specifically, the license issuing section 212 generates the installation key 281 illustrated in Fig. 5 described above.

The purchase code generated in the processing of step S1 is set in the system unique information of the installation key 281. The unique device ID of the information processing apparatus 23 received from the information processing apparatus 21 in the processing of step S2 is set as the unique device ID of the installation key 281. The maintenance start date and the valid period length received from the information processing apparatus 21 in the processing of step S3 are set as the maintenance start date and the valid period length of the installation key 281.

In step S5, the server 11 transmits the installation key 281. For example, the license issuing section 212 encrypts the installation key 281 using a private key, and generates the license file 271 including the encrypted installation key 281. The license issuing section 212 transmits the license file 271 to the information processing apparatus 21 via the communication section 119A and the network 13.

By contrast, the information processing apparatus 21 receives the license file 271 and stores the license file in the removable medium 22.

### <Maintenance License Application Processing>

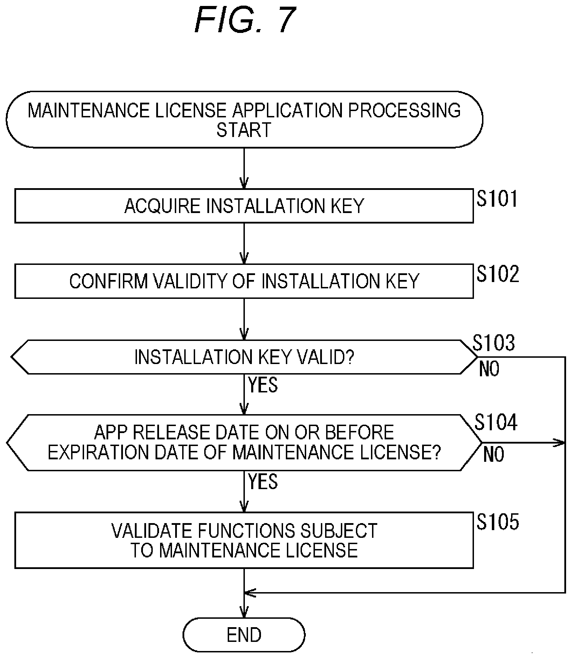

Next, maintenance license application processing executed by the information processing apparatus 23 will be described with reference to a flowchart in Fig. 7.

Note that it is assumed that the APP 251 has been installed in the information processing apparatus 23 and that the APP 251 has been activated before this processing.

In step S101, the information processing apparatus 23 acquires the installation key 281.

For example, the user attaches the removable medium 22 storing the license file 271 to the drive 120C of the information processing apparatus 23.

By contrast, the drive 120C reads the license file 271 from the removable medium 22 and supplies the license file 271 to the license processing section 262. For example, the license processing section 262 causes the recording section 118C to store the license file 271.

In step S102, the license processing section 262 confirms the validity of the installation key 281.

Specifically, the license processing section 262 decrypts the installation key 281 included in the license file 271 using a public key acquired in advance. This public key is a key corresponding to the private key used by the server 11 to encrypt the installation key 281.

Furthermore, in a case where decryption of the installation key 281 is successful, the license processing section 262 reads the unique device ID of the information processing apparatus 23 stored in advance in the recording section 118C at the time of factory shipment or the like. The license processing section 262 compares the unique device ID included in the installation key 281 with the read unique device ID.

In step S103, the license processing section 262 determines whether or not the installation key 281 is valid. In a case where the unique device ID included in the installation key 281 matches the unique device ID of the information processing apparatus 23 stored in the recording section 118C, the license processing section 262 determines that the installation key 281 is valid, and the processing proceeds to step S104.

Note that installation of the installation key 281 on the information processing apparatus 23 is normally completed when the validity of the installation key 281 has been confirmed. Note that hereinafter, installation of the installation key 281 on the information processing apparatus 23 is also referred to as installation of a maintenance license on the information processing apparatus 23.

In step S104, the license processing section 262 determines whether or not the release date of the APP 251 is on or before the expiration date of the maintenance license. Specifically, the license processing section 262 calculates the expiration date of the maintenance license on the basis of the maintenance start date and the valid period length included in the installation key 281. In a case where the license processing section 262 determines that the APP release date stored in the APP 251 is on or before the calculated expiration date (including a case where the APP release date and the expiration date match), the processing proceeds to step S105.

In step S105, the information processing apparatus 23 validates the functions subject to the maintenance license. Specifically, the license processing section 262 notifies the execution section 261 that the maintenance license is valid. The execution section 261 validates functions subject to the maintenance license determined to be valid and enters an executable state.

Thereafter, the maintenance license application processing ends.

Conversely, in step S104, in a case where the license processing section 262 determines that the APP release date stored in the APP 251 is after the calculated expiration date of the maintenance license, the processing of step S105 is skipped, and the maintenance license application processing ends.

In this case, the functions subject to the maintenance license are not validated.

Furthermore, in step S103, in a case where decryption of the installation key 281 has failed, or in a case where the unique device ID included in the installation key 281 does not match the unique device ID of the information processing apparatus 23, the license processing section 262 determines that the installation key 281 is not valid, the processing of steps S104 and S105 is skipped, and the maintenance license application processing ends.

Also in this case, the functions subject to the maintenance license are not validated. Furthermore, installation of the installation key 281 on the information processing apparatus 23 is not normally completed.

<APP Activation Processing>

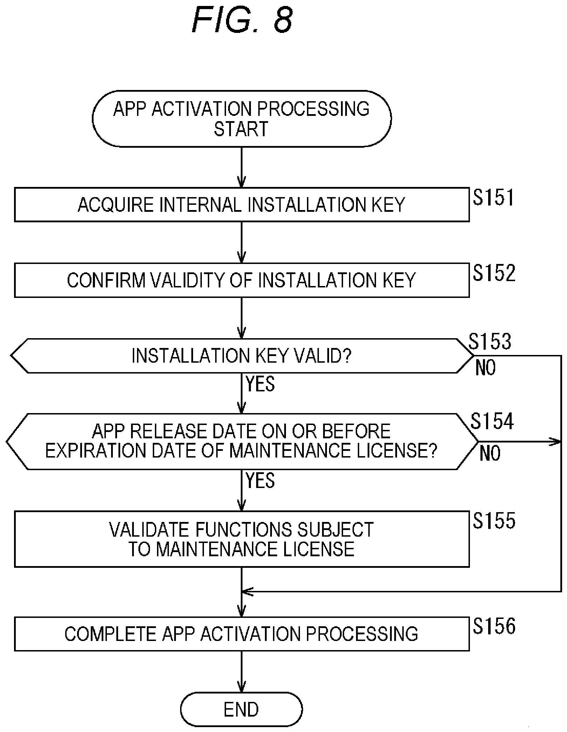

Next, APP activation processing executed by the information processing apparatus 23 will be described with reference to a flowchart in Fig. 8.

This processing is started, for example, when the user inputs an instruction to activate the APP 251 using the input section 116C of the information processing apparatus 23.

In step S151, the license processing section 262 acquires the internal installation key 281. Specifically, the license processing section 262 reads the license file 271 including the installation key 281 from the recording section 118.

In steps S152 to S155, processing similar to that of steps S102 to S105 in Fig. 7 is performed. Therefore, the validation of functions subject to the maintenance license is controlled on the basis of the determination result of the validity of the maintenance license.

In step S156, the execution section 261 completes activation of the APP 251.

Thereafter, the APP activation processing ends.

### <Example of Maintenance License Operation Method>

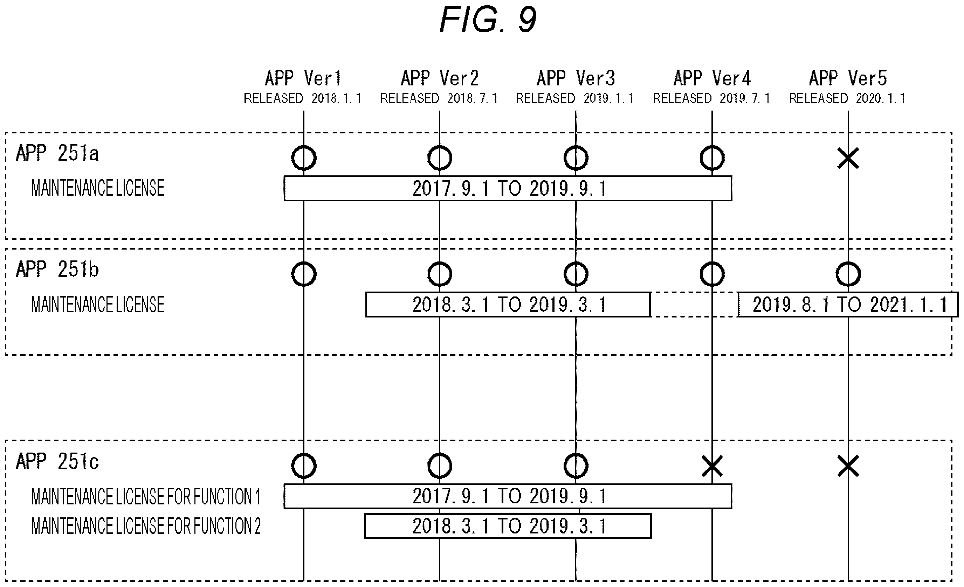

Next, an example of a maintenance license operation method of the APP 251 will be described with reference to Fig. 9.

Note that hereinafter, it is assumed that three APPs 251 have been installed on the information processing apparatus 23: APPs 251a to 251c.

Furthermore, hereinafter, it is assumed that a maintenance license covering all functions of the APP 251a whose valid period is from September 1, 2017 to September 1, 2019 is installed on the information processing apparatus 23. It is assumed that a maintenance license covering all functions of the APP 251b whose valid period is from March 1, 2018 to March 1, 2019 and from August 1, 2019 to January 1, 2021 is installed on the information processing apparatus 23. It is assumed that a maintenance license covering function 1 of the APP 251c whose valid period is from September 1, 2017 to September 1, 2019 is installed on the information processing apparatus 23. It is assumed that a maintenance license covering function 2 of the APP 251c whose valid period is from March 1, 2018 to March 1, 2019 is installed on the information processing apparatus 23.

Furthermore, hereinafter, it is assumed that version 1 of the APPs 251a to 251c was released on January 1, 2018, version 2 was released on July 1, 2018, version 3 was released on January 1, 2019, version 4 was released on July 1, 2019, and version 5 was released on January 1, 2020.

In this case, versions 1 to 4 of the APP 251a can be used because they were released before the expiration date (September 1, 2019) of the maintenance license for the APP 251a. Conversely, version 5 of the APP 251a cannot be used because it was released after the expiration date of the maintenance license for the APP 251a.

For the APP 251a, the expiration date of the latest maintenance license is valid. Therefore, versions 1 to 5 of the APP 251b can be used because they were released before the second expiration date (January 1, 2021) of the maintenance license of the APP 251b. That is, versions 1 and 4 of the APP 251b were released outside the first and second valid periods of the maintenance license of the APP 251b, but were released before the expiration date of the second maintenance license, and thus can be used.

Note that operation may be performed to prohibit provision of a blank period in the valid period of the maintenance license covering the same function of the APP 251. For example, operation may be performed such that a blank period provided between the first valid period and the second valid period of the maintenance license for the APP 251b in Fig. 9 is not allowed.

Versions 1 to 3 of function 1 of the APP 251c can be used because they were released before the expiration date (September 1, 2019) of the maintenance license for function 1. Versions 1 to 3 of function 2 of the APP 251c can be used because they were released before the expiration date (March 1, 2019) of the maintenance license for function 2.

That is, version 4 of function 1 of the APP 251c was released before the expiration date of the maintenance license for function 1 but after the expiration date of the maintenance license for function 2, and thus cannot be used. Furthermore, version 4 of function 2 of the APP 251c cannot be used because it was released after the expiration date of the maintenance license for function 2.

That is, in this example, in each version of the APP 251, when the expiration date of the maintenance license for at least one function has expired, operation is performed to make all functions subject to each maintenance license unusable. In other words, in each version of the APP 251, in a case where the APP release date is on or before the expiration date of all maintenance licenses, all functions subject to each maintenance license can be used, and in a case where the APP release date is after the expiration date of at least one maintenance license, no functions subject to each maintenance license can be used.

Note that, in this example, for example, only the version 4 of function 2 whose expiration date has expired may be made unusable, and version 4 of the function 1 may be made usable. That is, a function corresponding to a maintenance license whose expiration date is on or after the APP release date may be validated, and a function corresponding to a maintenance license whose expiration date is before the APP release date may be invalidated.

Furthermore, version 5 of function 1 of the APP 251c cannot be used because it was released after the expiration date of the maintenance license for function 1. Moreover, version 5 of function 2 of the APP 251c cannot be used because it was released after the expiration date of the maintenance license for function 2.

As described above, a time-limited maintenance license can be easily used in the information processing apparatus 23 that does not communicate with the server 11.

### <<2. Variation>>

Hereinafter, a variation of the above-described embodiment of the present technology will be described.

### <Variation Regarding License Operation Method>

For example, in addition to a maintenance license, a use license for using the APP 251 may be used. That is, a user holding a use license for the APP 251 may be allowed to use the APP 251.

In this case, a user who holds only a use license for the APP 251 but does not hold a maintenance license may be allowed to use the APP 251, or may not be allowed to use the APP 251.

In the former case, for example, the user installs (stores) use license data (e.g., an installation key for a use license) regarding a use license for the APP 251 on the information processing apparatus 23, thus enabling use of functions of the APP 251 of the version at time of purchase of the use license in the information processing apparatus 23. Conversely, the user cannot upgrade the functions of the APP 251 unless a license held by the APP 251 is installed on the information processing apparatus 23.

Note that hereinafter, installation of the use license data on the information processing apparatus 23 is also referred to as installation of a use license on the information processing apparatus 23.

In the latter case, even if the user installs a use license for the APP 251 on the information processing apparatus 23, the user cannot use the functions of the APP 251 on the information processing apparatus 23 unless the user installs a maintenance license for the APP 251 on the information processing apparatus 23.

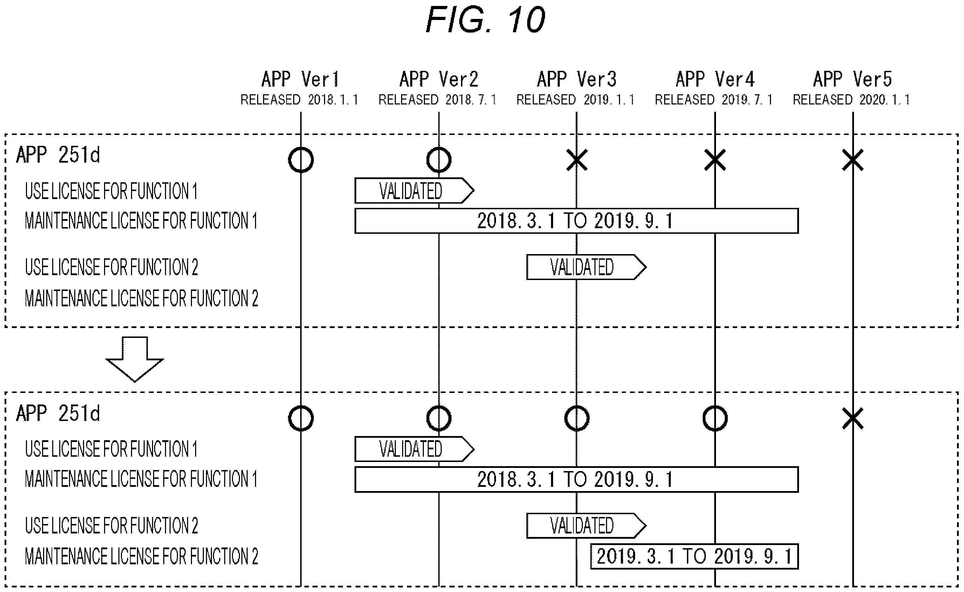

Fig. 10 illustrates an example of an operation method in the latter case.

Note that hereinafter, as illustrated in the upper part of Fig. 10, it is assumed that the use license for function 1 at the time of version 2 of an APP 251d is installed on the information processing apparatus 23 and validated. It is assumed that the use license for function 2 at the time of version 3 of the APP 251d is installed on the information processing apparatus 23 and validated. Moreover, it is assumed that the maintenance license for function 1 of the APP 251d whose valid period is from March 1, 2018 to September 1, 2019 is installed on the information processing apparatus 23. Conversely, it is assumed that the maintenance license for function 2 of the APP 251d is not installed on the information processing apparatus 23.

Furthermore, hereinafter, it is assumed that version 1 of the APP 251d was released on January 1, 2018, version 2 was released on July 1, 2018, version 3 was released on January 1, 2019, version 4 was released on July 1, 2019, and version 5 was released on January 1, 2020.

In this case, versions 1 and 2 of function 1 of the APP 251d can be used because they were released before the expiration date (September 1, 2019) of the maintenance license for function 1.

That is, versions 3 and 4 of function 1 of the APP 251d were released before the expiration date of the maintenance license for function 1 but a maintenance license for function 2 has not been installed, and thus cannot be used. Version 5 of function 1 of the APP 251d cannot be used because it was released after the expiration date of the maintenance license for function 1. Furthermore, all versions of function 2 of the APP 251d cannot be used because a maintenance license for function 2 has not been installed.

By contrast, as illustrated in the lower part of Fig. 10, the maintenance license for function 2 of the APP 251d whose expiration date is from March 1, 2019 to September 1, 2019 has been installed on the information processing apparatus 23, thus enabling use of versions 1 to 4 of function 2 released before the expiration date (September 1, 2019) of the maintenance license for function 2. At the same time, after the use license for function 2 has been installed, versions 3 and 4 of function 1 released before the expiration date (September 1, 2019) of the maintenance license for function 1 can be used.

Conversely, version 5 of function 1 of the APP 251d cannot be used because it was released after the expiration date of the maintenance license for function 1. Version 5 of function 2 of the APP 251d cannot be used because it was released after the expiration date of the maintenance license for function 2.

That is, in this operation method, in each version of the APP 251, if there is even one use license function for which no maintenance license is installed among the functions (hereinafter referred to as use license functions) for which a use license is installed on the information processing apparatus 23, none of the use license functions can be used.

Furthermore, for example, the maintenance license may be operated so that only a version released during the valid period of the maintenance license can be used. For example, in the example of Fig. 9, regarding function 2 of the APP 251c, only versions 2 and 3 released during the valid period of the maintenance license may be usable, and versions 1, 4, and 5 released outside the valid period may be unusable.

Moreover, for example, the valid period of the APP 251 may be managed in units of time (e.g., in units of hours, minutes, seconds, etc.) instead of units of days. In this case, for example, the release time of the APP 251 stored in the APP 251 is also expressed in units of time. For example, dates and times such as 12:00 on July 1, 2019 are stored as the release time of the APP 251.

Furthermore, for example, in the example of Fig. 9, even after the expiration date of the maintenance license for the APP 251a has expired, an operation is assumed in which a minor version obtained by applying a patch such as correction of a bug or a security hole to version 4 of the APP 251a can be used on the information processing apparatus 23.

By contrast, for example, the versions of the APP 251 may be divided into two stages of major versions and minor versions according to change content, and the release time of a minor version stored in the APP 251 may be matched with the release time of a major version that is the basis of the minor version. For example, in the example of Fig. 9, the release time of a minor version released between versions 4 and 5, which are major versions of the APP 251a, may be stored in the APP 251a in accordance with the release time of version 4.

Therefore, for example, even after the maintenance license of the APP 251a expires on September 1, 2019, a minor version of version 4 of the APP 251a can be used.

### <Variation Regarding Installation Key 281>

Although Fig. 5 illustrates an example in which the installation key 281 includes a maintenance start date and a valid period length as information associated with the valid period of the maintenance license, for example, a maintenance start date and a maintenance end date may be included. Furthermore, for example, a maintenance end date and a valid period length may be included.

Moreover, for example, the installation key 281 may include only a maintenance end date. In this case, for example, the valid period of the maintenance license is from when the installation key 281 is installed on the information processing apparatus 23 to the maintenance end date.

Furthermore, for example, information associated with a maintenance license for each function of the APP 251 may be included in one installation key 281. For example, information associated with a maintenance license for functions 1 and 2 of the APP 251c in the example of Fig. 9 may be included in one installation key 281.

### <Countermeasure Against Unauthorized Use of Maintenance License>

Security measures against eavesdropping, falsification, and the like of the installation key 281 are not particularly limited.

For example, in order to prevent unauthorized use of the maintenance license, the license processing section 262 of the APP 251 may be obfuscated. In particular, it is desirable to obfuscate a portion in which the APP release date is stored and a portion in which processing of comparing the APP release date to the expiration date of the maintenance license is performed. Note that the obfuscation method is not particularly limited.

### <Maintenance License Confirmation Method>

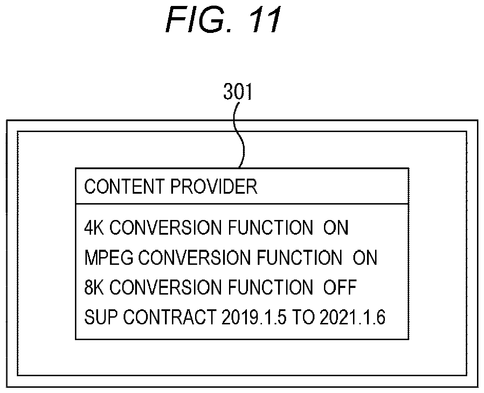

Fig. 11 illustrates an example of a maintenance license confirmation screen displayed on a display of the output section 117C of the information processing apparatus 23.

In this example, a window 301 is displayed on the display.

For example, a top field of the window 301 displays the name of a provider which provides an SUP service (maintenance license).

In the window 301, a list of functions subject to the maintenance license and whether or not each function has been validated are displayed. In this example, an example is illustrated in which a 4K conversion function and an MPEG conversion function are validated and an 8K conversion function is invalidated.

Furthermore, the window 301 indicates that the valid period of the maintenance license (SUP contract period) is from January 5, 2019 to January 6, 2021.

Therefore, the user can easily confirm the valid period of the maintenance license and the functions and operating state subject to the maintenance license.

### <Other Variations>

The present technology can also be applied to a maintenance license of a program other than an APP, for example, a program such as an operating system or middleware.

### <<3. Others>>

### <Computer Configuration Example>

The above-described series of processing can be executed by hardware, or can be executed by software. In a case where the series of processing is executed by software, a program constituting the software is installed on a computer. Here, examples of the computer include a computer incorporated in dedicated hardware and, for example, a general-purpose personal computer, etc. capable of executing various functions by installing various programs.

Note that the program executed by the computer may be a program in which processing is performed in a time series in the order described in the present specification, or may be a program in which processing is performed in parallel or at a necessary timing such as when a call is made.

Furthermore, in the present specification, a system refers to a set of a plurality of constituent elements (devices, modules (parts), etc.), and it does not matter whether or not all of the constituent elements are in the same housing. Therefore, a plurality of devices housed in separate housings and connected via a network and one device in which a plurality of modules is housed in one housing are both systems.

Moreover, the embodiments of the present technology are not limited to the above-described embodiments, and various modifications can be made without departing from the gist of the present technology.

For example, the present technology can have a cloud computing configuration in which one function is shared and cooperatively processed by a plurality of devices via a network.

Furthermore, each step described in the above-described flowcharts can be executed by one device or can be shared and executed by a plurality of devices.

Moreover, in a case where a plurality of processes is included in one step, the processes included in the one step can be executed by one device or can be shared and executed by a plurality of devices.

Note that the effects described in the present specification are merely examples and are not limitations, and other effects may be achieved.

### REFERENCE SIGNS LIST

- 1: Information processing system
- 11: Server
- 12: Client
- 13: Network
- 21: Information processing apparatus
- 22: Removable medium
- 23: Information processing apparatus
- 111: CPU
- 201: Information processing section
- 212: License generating section
- 251: APP
- 261: Execution section
- 262: License processing section
- 271: License file
- 281: Installation key

## Claims

1. An information processing method comprising controlling, by an information processing apparatus (21), execution of a function of a program subject to a maintenance license on a basis of a result of comparison between a valid period of the maintenance license based on maintenance license data stored in the information processing apparatus and a release time of the program stored in the program.

2. The information processing method according to claim 1, wherein
the maintenance license data includes first identification information of the information processing apparatus, and
in a case where the first identification information matches second identification information stored in the information processing apparatus, the information processing apparatus controls execution of the function on a basis of a result of comparison between the valid period of the maintenance license and the release time of the program.

3. The information processing method according to claim 1, wherein
the information processing apparatus validates the function in a case where the release time of the program is on or before an expiration date of the maintenance license, and invalidates the function in a case where the release time of the program is after the expiration date of the maintenance license.

4. The information processing method according to claim 3, wherein
in a case where a plurality of pieces of the maintenance license data having different valid periods for the function is stored in the information processing apparatus, the information processing apparatus validates the function in a case where the release time of the program is on or before the expiration date of the latest maintenance license, and invalidates the function in a case where the release time of the program is after the expiration date of the latest maintenance license.

5. The information processing method according to claim 1, wherein
in a case where the maintenance license data including information associated with the valid period of the maintenance license for each of a plurality of functions is stored in the information processing apparatus, the information processing apparatus controls execution of the plurality of functions on a basis of a result of comparison between the valid period of each maintenance license and the release time of the program.

6. The information processing method according to claim 5, wherein
the information processing apparatus either i) validates the plurality of functions in a case where the release time of the program is on or before an expiration date of the maintenance license for all of the plurality of functions, and invalidates the plurality of functions in a case where the release time of the program is after the expiration date of the maintenance license for at least one of the plurality of functions or ii) validates a function subject to the maintenance license for which an expiration date is on or after the release time of the program, and invalidates a function subject to the maintenance license for which the expiration date is before the release time of the program.

7. The information processing method according to claim 1, wherein
in a case where use license data regarding a use license for using the function is stored in the information processing apparatus, the information processing apparatus controls execution of the function on a basis of a result of comparison between the valid period of the maintenance license and the release time of the program.

8. The information processing method according to claim 1, wherein
the information processing apparatus invalidates the function in a case where the maintenance license data is not stored in the information processing apparatus.

9. The information processing method according to claim 1, wherein
the information processing apparatus controls display regarding the function subject to the maintenance license and the valid period of the maintenance license.

10. The information processing method according to claim 1, wherein
the release time of the program indicates a release time for each version of the program.

11. The information processing method according to claim 1, wherein
the maintenance license covers either i) all functions of the program or ii) some functions of the program.

12. The information processing method according to claim 1, wherein
the program causes the information processing apparatus to execute processing of comparing the valid period of the maintenance license with the release time of the program, and
in the program, a portion in which the release time of the program is stored and a portion for executing the processing of comparing the valid period of the maintenance license with the release time of the program are obfuscated.

13. A computer program product comprising computer readable instructions which, when loaded onto an information processing apparatus, configures the information processing apparatus to perform a method having the steps of: controlling, on the information processing apparatus, execution of a function of a program subject to a maintenance license on a basis of a result of comparison between a valid period of the maintenance license based on maintenance license data stored in the information processing apparatus and the release time of the program stored in the computer readable instructions.

14. The program according to claim 13, wherein
a portion in which the release time is stored and a portion for executing processing of comparing the release time with an expiration date of the maintenance license are obfuscated.

15. An information processing apparatus comprising
an execution section configured to control execution of a function of a program subject to a maintenance license on a basis of a result of comparison between a valid period of the maintenance license based on internally stored maintenance license data and a release time of the program stored in the program.

## Patentansprüche

1. Informationsverarbeitungsverfahren, umfassend:
Steuern, durch eine Informationsverarbeitungsvorrichtung (21), einer Ausführung einer Funktion eines Programms, die einer Wartungslizenz unterliegt, auf einer Basis eines Vergleichsergebnisses zwischen einer Gültigkeitsperiode der Wartungslizenz basierend auf Wartungslizenzdaten, die in der Informationsverarbeitungsvorrichtung gespeichert sind, und einem Freigabezeitpunkt des Programms, der in dem Programm gespeichert ist.

2. Informationsverarbeitungsverfahren nach Anspruch 1, wobei
die Wartungslizenzdaten erste Identifikationsinformationen der Informationsverarbeitungsvorrichtung einschließen und
in einem Fall, in dem die ersten Identifikationsinformationen mit zweiten Identifikationsinformationen übereinstimmen, die in der Informationsverarbeitungsvorrichtung gespeichert sind, die Informationsverarbeitungsvorrichtung die Ausführung der Funktion auf einer Basis eines Vergleichsergebnisses zwischen der Gültigkeitsperiode der Wartungslizenz und dem Freigabezeitpunkt des Programms steuert.

3. Informationsverarbeitungsverfahren nach Anspruch 1, wobei
die Informationsverarbeitungsvorrichtung die Funktion in einem Fall gültig macht, in dem der Freigabezeitpunkt des Programms an oder vor einem Ablaufdatum der Wartungslizenz liegt, und die Funktion in einem Fall ungültig macht, in dem der Freigabezeitpunkt des Programms nach dem Ablaufdatum der Wartungslizenz liegt.

4. Informationsverarbeitungsverfahren nach Anspruch 3, wobei
in einem Fall, in dem eine Vielzahl von Elementen der Wartungslizenzdaten, die unterschiedliche Gültigkeitsperioden für die Funktion aufweisen, in der Informationsverarbeitungsvorrichtung gespeichert sind, die Informationsverarbeitungsvorrichtung die Funktion in einem Fall gültig macht, in dem der Freigabezeitpunkt des Programms an oder vor dem Ablaufdatum der aktuellsten Wartungslizenz liegt, und die Funktion in einem Fall ungültig macht, in dem der Freigabezeitpunkt des Programms nach dem Ablaufdatum der aktuellsten Wartungslizenz liegt.

5. Informationsverarbeitungsverfahren nach Anspruch 1, wobei
in einem Fall, in dem die Wartungslizenzdaten, die Informationen einschließen, die der Gültigkeitsperiode der Wartungslizenz für jede einer Vielzahl von Funktionen zugeordnet sind, in der Informationsverarbeitungsvorrichtung gespeichert sind, die Informationsverarbeitungsvorrichtung die Ausführung der Vielzahl von Funktionen auf einer Basis eines Vergleichsergebnisses zwischen der Gültigkeitsperiode jeder Wartungslizenz und dem Freigabezeitpunkt des Programms steuert.

6. Informationsverarbeitungsverfahren nach Anspruch 5, wobei
die Informationsverarbeitungsvorrichtung entweder i) die Vielzahl von Funktionen in einem Fall gültig macht, in dem der Freigabezeitpunkt des Programms an oder vor einem Ablaufdatum der Wartungslizenz für alle der Vielzahl von Funktionen liegt, und die Vielzahl von Funktionen in einem Fall ungültig macht, in dem der Freigabezeitpunkt des Programms nach dem Ablaufdatum der Wartungslizenz für mindestens eine der Vielzahl von Funktionen liegt, oder ii) eine Funktion gültig macht, die der Wartungslizenz unterliegt, deren Ablaufdatum an oder nach dem Freigabezeitpunkt des Programms liegt, und eine Funktion ungültig macht, die der Wartungslizenz unterliegt, deren Ablaufdatum vor dem Freigabezeitpunkt des Programms liegt.

7. Informationsverarbeitungsverfahren nach Anspruch 1, wobei
in einem Fall, in dem Nutzungslizenzdaten bezüglich einer Nutzungslizenz zum Nutzen der Funktion in der Informationsverarbeitungsvorrichtung gespeichert sind, die Informationsverarbeitungsvorrichtung die Ausführung der Funktion auf einer Basis eines Vergleichsergebnisses zwischen der Gültigkeitsperiode der Wartungslizenz und dem Freigabezeitpunkt des Programms steuert.

8. Informationsverarbeitungsverfahren nach Anspruch 1, wobei
die Informationsverarbeitungsvorrichtung die Funktion in einem Fall ungültig macht, in dem die Wartungslizenzdaten nicht in der Informationsverarbeitungsvorrichtung gespeichert sind.

9. Informationsverarbeitungsverfahren nach Anspruch 1, wobei
die Informationsverarbeitungsvorrichtung eine Anzeige bezüglich der Funktion, die der Wartungslizenz unterliegt, und der Gültigkeitsperiode der Wartungslizenz steuert.

10. Informationsverarbeitungsverfahren nach Anspruch 1, wobei
der Freigabezeitpunkt des Programms einen Freigabezeitpunkt für jede Version des Programms angibt.

11. Informationsverarbeitungsverfahren nach Anspruch 1, wobei
die Wartungslizenz entweder i) alle Funktionen des Programms oder ii) einige Funktionen des Programms abdeckt.

12. Informationsverarbeitungsverfahren nach Anspruch 1, wobei
das Programm die Informationsverarbeitungsvorrichtung veranlasst, ein Verarbeiten zum Vergleichen der Gültigkeitsperiode der Wartungslizenz mit dem Freigabezeitpunkt des Programms auszuführen, und
in dem Programm ein Teil, in dem der Freigabezeitpunkt des Programms gespeichert ist, und ein Teil zum Ausführen des Verarbeitens zum Vergleichen der Gültigkeitsperiode der Wartungslizenz mit dem Freigabezeitpunkt des Programms verschleiert sind.

13. Computerprogrammprodukt, umfassend computerlesbare Anweisungen, die, wenn sie auf eine Informationsverarbeitungsvorrichtung geladen werden, die Informationsverarbeitungsvorrichtung konfigurieren, um ein Verfahren auszuführen, das die Schritte aufweist: Steuern, auf der Informationsverarbeitungsvorrichtung, der Ausführung einer Funktion eines Programms, die einer Wartungslizenz unterliegt, auf einer Basis eines Vergleichsergebnisses zwischen einer Gültigkeitsperiode der Wartungslizenz basierend auf Wartungslizenzdaten, die in der Informationsverarbeitungsvorrichtung gespeichert sind, und dem Freigabezeitpunkt des Programms, der in den computerlesbaren Anweisungen gespeichert ist.

14. Programm nach Anspruch 13, wobei
ein Teil, in dem der Freigabezeitpunkt gespeichert ist, und ein Teil zum Ausführen des Verarbeitens zum Vergleichen des Freigabezeitpunkts mit einem Ablaufdatum der Wartungslizenz verschleiert sind.

15. Informationsverarbeitungsvorrichtung, umfassend
einen Ausführungsabschnitt, der konfiguriert ist, um die Ausführung einer Funktion eines Programms, die einer Wartungslizenz unterliegt, auf einer Basis eines Vergleichsergebnisses zwischen einer Gültigkeitsperiode der Wartungslizenz basierend auf intern gespeicherten Wartungslizenzdaten und einem Freigabezeitpunkt des Programms zu steuern, der in dem Programm gespeichert ist.

## Revendications

1. Procédé de traitement d'informations comprenant
la commande, par un appareil de traitement d'informations (21), d'une exécution d'une fonction d'un programme soumis à une licence de maintenance sur une base d'un résultat de comparaison entre une période de validité de la licence de maintenance basée sur des données de licence de maintenance stockées dans l'appareil de traitement d'informations et un moment de publication du programme stocké dans le programme.

2. Appareil de traitement d'informations selon la revendication 1, dans lequel
les données de licence de maintenance comportent des premières informations d'identification de l'appareil de traitement d'informations, et
dans le cas où les premières informations d'identification correspondent à des secondes informations d'identification stockées dans l'appareil de traitement d'informations, l'appareil de traitement d'informations commande une exécution de la fonction sur une base d'un résultat de comparaison entre la période de validité de la licence de maintenance et le moment de publication du programme.

3. Appareil de traitement d'informations selon la revendication 1, dans lequel
l'appareil de traitement d'informations valide la fonction dans le cas où le moment de publication du programme est égal ou antérieur à la date d'expiration de la licence de maintenance, et invalide la fonction dans le cas où le moment de publication du programme est postérieur à la date d'expiration de la licence de maintenance.

4. Appareil de traitement d'informations selon la revendication 3, dans lequel
dans le cas où une pluralité d'éléments de données de licence de maintenance ayant des périodes de validité différentes pour la fonction est stockée dans l'appareil de traitement d'informations, l'appareil de traitement d'informations valide la fonction dans le cas où le moment de publication du programme est égal ou antérieur à la date d'expiration de la dernière licence de maintenance, et invalide la fonction dans le cas où la moment de publication du programme est postérieur à la date d'expiration de la dernière licence de maintenance.

5. Appareil de traitement d'informations selon la revendication 1, dans lequel
dans le cas où les données de licence de maintenance comportant des informations associées à la période de validité de la licence de maintenance pour chacune d'une pluralité de fonctions sont stockées dans l'appareil de traitement d'informations, l'appareil de traitement d'informations commande une exécution de la pluralité de fonctions sur une base d'un résultat de comparaison entre la période de validité de chaque licence de maintenance et le moment de publication du programme.

6. Dispositif de traitement d'informations selon la revendication 5, dans lequel
l'appareil de traitement d'informations soit i) valide la pluralité de fonctions dans le cas où le moment de publication du programme est égal ou antérieur à la date d'expiration de la licence de maintenance pour l'ensemble de la pluralité
de fonctions, et invalide la pluralité de fonctions dans le cas où le moment de publication du programme est postérieur à la date d'expiration de la licence de maintenance pour au moins l'une parmi la pluralité de fonctions, soit ii) valide une fonction soumise à la licence de maintenance dont la date d'expiration est égale ou postérieure au moment de publication du programme, et invalide une fonction soumise à la licence de maintenance dont la date d'expiration est antérieure au moment de publication du programme.

7. Appareil de traitement d'informations selon la revendication 1, dans lequel
dans le cas où des données de licence d'utilisation concernant une licence d'utilisation pour l'utilisation de la fonction sont stockées dans l'appareil de traitement d'informations, l'appareil de traitement d'informations commande une exécution de la fonction sur une base d'un résultat de comparaison entre la période de validité de la licence de maintenance et le moment de publication du programme.

8. Appareil de traitement d'informations selon la revendication 1, dans lequel
l'appareil de traitement d'informations invalide la fonction dans le cas où les données de licence de maintenance ne sont pas stockées dans l'appareil de traitement d'informations.

9. Appareil de traitement d'informations selon la revendication 1, dans lequel
l'appareil de traitement d'informations commande l'affichage de la fonction soumise à la licence de maintenance et de la période de validité de la licence de maintenance.

10. Appareil de traitement d'informations selon la revendication 1, dans lequel
le moment de publication du programme indique un moment de publication pour chaque version du programme.

11. Appareil de traitement d'informations selon la revendication 1, dans lequel
la licence de maintenance couvre soit i) toutes les fonctions du programme, soit ii) certaines fonctions du programme.

12. Appareil de traitement d'informations selon la revendication 1, dans lequel
le programme amène l'appareil de traitement d'informations à exécuter un traitement de comparaison de la période de validité de la licence de maintenance avec le moment de publication du programme, et
dans le programme, une partie dans laquelle le moment de publication du programme est stocké et une partie pour une exécution du traitement de comparaison de la période de validité de la licence de maintenance avec le moment de publication du programme sont occultées.

13. Produit-programme informatique comprenant des instructions lisibles par ordinateur qui, lorsqu'elles sont chargées sur un appareil de traitement d'informations, configure l'appareil de traitement d'informations pour réaliser un procédé comportant les étapes consistant à : commander, sur l'appareil de traitement d'informations, une exécution d'une fonction d'un programme soumis à une licence de maintenance sur une base d'un résultat de comparaison entre une période de validité de la licence de maintenance basée sur des données de licence de maintenance stockées dans l'appareil de traitement d'informations et le moment de publication du programme stocké dans les instructions lisibles par ordinateur.

14. Programme selon la revendication 13, dans lequel
une partie dans laquelle le moment de publication est stocké et une partie pour l'exécution d'un traitement de comparaison du moment de publication avec une date d'expiration de la licence de maintenance sont occultées.

15. Appareil de traitement d'informations comprenant
une section d'exécution configurée pour commander une exécution d'une fonction d'un programme soumis à une licence de maintenance sur une base d'un résultat de comparaison entre une période de validité de la licence de maintenance basée sur des données de licence de maintenance stockées en interne et un moment de publication du programme stockée dans le programme.
